Europäisches Patentamt

European Patent Office

Office européen des brevets

(19)

(11) Numéro de publication: **0 052 537 B1**

(12) **FASCICULE DE BREVET EUROPEEN**

(45) Date de publication du fascicule du brevet:
16.05.84

(51) Int. Cl.³: **E 21 B 43/267, C 04 B 35/48**

(21) Numéro de dépôt: **81401596.2**

(22) Date de dépôt: **14.10.81**

(54) **Agent de soutènement à base de zircone et de silice pour fractures géologiques profondes.**

(30) Priorité: **13.11.80 FR 8024128**

(43) Date de publication de la demande:
**26.05.82 Bulletin 82/21**

(45) Mention de la délivrance du brevet:
**16.05.84 Bulletin 84/20**

(84) Etats contractants désignés:
**DE FR GB IT**

(56) Documents cités:
**FR - A - 1 159 278**
**FR - A - 2 280 784**
**FR - A - 2 306 327**
**FR - A - 2 359 274**
**US - A - 2 924 533**
**US - A - 3 373 815**
**US - A - 3 437 148**
**US - A - 4 106 947**

(73) Titulaire: **SOCIETE EUROPEENNE DES PRODUITS REFRACTAIRES, 67, Boulevard du Château, F-92200 Neuilly-sur-Seine (FR)**

(72) Inventeur: **Urffer, Daniel, 5, Rue Paul Signac, F-84310 Morieres-les-Avignon (FR)**

(74) Mandataire: **De Boisse, Louis, 37, Avenue Franklin D. Roosevelt, F-75008 Paris (FR)**

BUNDESDRUCKEREI BERLIN

## Agent de soutènement à base de zircone et de silice pour fractures géologiques profondes

La présente invention se rapporte au domaine de l'extraction pétrolière et est relative à un agent de soutènement de fractures créées dans les parois d'un puits traversant des formations géologiques.

Il est bien connu d'effectuer la stimulation des puits par fracturation des couches géologiques, par exemple en injectant un fluide à haute pression au niveau de la formation que l'on désire fracturer, puis en injectant des matériaux granulés solides (agent de soutènement) pour empêcher les fractures de se refermer.

De nombreux matériaux ont été proposés. Mais, dans les formations géologiques à grande profondeur, dont l'exploitation pour l'extraction de pétrole ou de gaz naturel se développe, les contraintes s'exerçant sur les empilements de grains solides sont telles que de nombreux matériaux usuellement utilisés, en particulier le sable siliceux ou des billes de verre, se fragmentent de façon importante. On constate que les fragments créés diminuent la perméabilité de la fracture. De ce fait, la production des formations fracturées décroît.

Il a été observé par ailleurs que le comportement des agents de soutènement vis-à-vis des sollicitations rencontrées dans ce type d'opération n'est pas seulement en rapport avec la résistance à l'écrasement des grains pris individuellement. On a donc cherché des agents de soutènement ayant un taux de casse en lit multicouche plus faible.

On trouve à l'heure actuelle, dans le commerce, des agents de soutènement constitués d'alumine ou de bauxite frittée. Egalement, la Demanderesse commercialise un agent de soutènement constitué de zircone et de silice dans des proportions telles que le rapport en poids $ZrO_2/SiO_2$ soit d'au moins 1,5, de l'alumine et de l'oxyde de sodium pouvant être également inclus de façon facultative (voir les brevets français 2 306 327 et 2 359 274 et le brevet des Etats-Unis d'Amérique 4 072 193). Tous les agents de soutènement à haute résistance mécanique disponibles dans le commerce présentent des masses volumiques élevées, d'au moins 3300 $Kg/m^3$ et pouvant atteindre 3800 $Kg/m^3$.

L'injection d'agents de soutènement dont la masse volumique est élevée crée des difficultés de transport au fond des fractures du fait de leur vitesse de sédimentation dans le fluide de fracturation. Il faut donc employer des fluides plus visqueux et plus denses afin de limiter au maximum la sédimentation et de permettre un placement progressif jusqu'au fond des fractures créées. Ces fluides ne donnent pas toujours les résultats les meilleurs (dégradation du fluide, endommagement de la formation) et sont, de plus, fort coûteux.

Il serait donc intéressant sur les plans techniques et économiques de disposer d'agents de soutènement à haute résistance mécanique pour grandes profondeurs, mais d'une masse volumique inférieure aux valeurs rencontrées avec les agents de soutènement disponibles actuellement. Outre l'intérêt économique que présente l'utilisation d'un fluide de fracturation moins complexe, la baisse de la masse volumique des agents de soutènement entraînera une baisse de la vitesse de sédimentation et, par là, contribuera à une meilleure efficacité de l'opération en favorisant le placement des agents de soutènement dans une proportion plus importante de la fracture. Dans un fluide, la vitesse de sédimentation d'une particule solide est proportionnelle à la différence des masses volumiques du solide et de fluide porteur. Toutes choses égales par ailleurs, la diminution de masse volumique d'un agent de soutènement de 3800 à 3200 $Kg/m^3$ entraînera une baisse de la vitesse de sédimentation de 21% dans un fluide d'une masse volumique de 1000 $Kg/m^3$ et de 24% dans un fluide d'une masse volumique de 1300 $Kg/m^3$.

Comme autres documents antérieurs dignes d'intérêt, on peut citer encore:

Le brevet des Etats-Unis d'Amérique No. 2 924 533 décrit des particules réfractaires sphéroïdales formées par fusion, granulation et solidification d'une composition comprenant, en poids, de 22,5—75% de zircone, de 25—55% de silice et de 0—22,5% d'alumine, et utiles comme milieu de grenaillage ou comme matière d'échange de chaleur. Aucune indication concernant la densité de ces particules ou leur utilité possible comme agent de soutènement n'est donnée.

Le brevet des Etats-Unis d'Amérique No. 4 106 947 décrit des billes, utiles dans des applications de broyage et de dispersion, formées par fusion, granulation et solidification d'une composition comprenant, en poids, jusqu'à 85% de zircone, une proportion de $SiO_2$ telle que le rapport pondéral $ZrO_2/SiO_2$ soit supérieur ou égal à 1,5, et au moins l'un des oxydes MgO et CaO en proportions telles que le rapport pondéral $MgO/SiO_2$ soit compris entre 0,03 et 1 et le rapport pondéral $CaO/SiO_2$ soit compris entre 0,03 et 1,45, de l'alumine et de l'oxyde de sodium pouvant également être inclus de façon facultative.

L'objet de l'invention est de fournir un agent de soutènement à haute résistance mécanique, notamment en lit multicouche, d'une masse volumique inférieure à 3250 $Kg/m^3$.

Plus particulièrement, l'invention concerne l'utilisation, comme agent de soutènement granulaire de haute résistance mécanique et d'une masse volumique inférieure à 3250 $Kg/m^3$, de billes formées par fusion, granulation et solidification d'une composition de départ comprenant, en poids sur la base des oxydes, 46 à 50 parties de $ZrO_2$, 54 à 50 parties de $SiO_2$, la somme $ZrO_2 + SiO_2$ totalisant 100 parties, 0 à 19 parties d'$Al_2O_3$ et 0 à 13,5 parties d'au moins un oxyde choisi dans le groupe formé par MgO, CaO, FeO et $TiO_2$.

De préférence, la composition de départ comprend 47,1 à 48,7 parties de $ZrO_2$, 52,9 à 51,3 parties de $SiO_2$, la somme de $ZrO_2 + SiO_2$ totalisant 100 parties, 8,2 à 16,9 parties d'$Al_2O_3$ et 4,1 à 8,5 parties d'au moins un oxyde choisi dans le groupe formé par MgO, CaO, FeO et $TiO_2$.

La composition des billes est sensiblement identique à celle de la composition de départ.

Les agents de soutènement dont la composition tombe dans la gamme large définie ci-dessus ont un comportement dans les essais de laboratoire décrits plus loin équivalent à celui des agents de soutènement à haute résistance connus jusqu'à des contraintes effectives de 70 MPa.

Les agents de soutènement dont la composition tombe dans la gamme préférée définie ci-dessus ont des masses volumiques comprises entre 3150 et 3250 $Kg/m^3$ et un comportement équivalent à celui des agents de soutènement à haute résistance connus actuellement, jusqu'à des contraintes effectives de 100 MPa, ce qui est supérieur aux contraintes effectives rencontrées dans les gisements les plus profonds.

La fabrication des billes de l'invention s'opère de façon classique. La charge d'oxydes constitutifs ou de précurseurs de ceux-ci (des matières minérales naturelles comme, par exemple, des silicates) peut être fondue dans un four électrique. Un filet de matière fondue est granulé par soufflage (à l'air ou à la vapeur d'eau). On obtient ainsi des billes d'une grosseur de 0,1 à 4 mm, les granulométries les plus appropriées pour l'application comme agent de soutènement sont situées entre 0,25 et 2,0 mm.

La fabrication de billes formées de $ZrO_2$ et de $SiO_2$ seuls avec un rapport $ZrO_2/SiO_2 \leq 1$ présente toutefois des difficultés, comme indiqué dans le brevet français 2 320 276 ou le brevet des Etats-Unis d'Amérique 4 106 947. Aussi, afin d'éviter les problèmes rencontrés avec la fabrication de billes constituées de $ZrO_2$ et $SiO_2$ seuls, il est recommandé de partir d'une composition comprenant au moins 4 parties d'$Al_2O_3$ et, aussi, de préférence, au moins 1 partie d'au moins un oxyde choisi dans le groupe formé par MgO, CaO, FeO et $TiO_2$. Avantageusement, on partira d'une composition contenant 8,2 à 16,9 parties d'$Al_2O_3$ et 4,1 à 8,5 parties de MgO, CaO, FeO et/ou $TiO_2$, pour 100 parties du total $ZrO_2 + SiO_2$. L'incorporation de ces additifs, notamment dans la gamme préférée ci-dessus, facilite la fusion de la composition de départ et permet une granulation sous forme de particules en majorité sphériques avec un bon rendement. Aussi, la composition de départ préférée permet de produire de la façon la plus économique (bon rendement) des agents de soutènement à taux de casse en lit multicouche équivalent à celui des agents de soutènement à haute résistance mécanique mais de masse volumique plus élevée.

Les exemples non limitatifs suivants sont donnés en vue d'illustrer l'invention.

Exemples 1 à 8 et temoins de comparaison A à D

On a préparé par fusion, granulation et solidification, des billes sensiblement sphériques présentant la composition et la masse volumique indiquées dans le Tableau 1 suivant qui indique aussi la valeur de certains rapports entre constituants.

Des billes selon les exemples 1 à 8 et les témoins A à D ayant une granulométrie dans la gamme de 0,425 à 1,0 mm ont été soumis à un essai de mesure de la conductivité et à un essai de mesure du taux de casse. Les billes des exemples 1 et 2, bien qu'entrant dans le cadre de l'invention, présentent des difficultés de fabrication (mauvais rendement), ce qui les rend peu intéressantes sur le plan économique.

L'essai de mesure de la conductivité est un essai classique qui consiste à mesurer la perméabilité k d'une couche de l'agent de soutènement, ayant une épaisseur initiale h (6 mm), soumise à une pression p, vis-à-vis du passage d'air sous pression à 20°C. La conductivité est égale au produit kh et est mesurée en Darcymètres. A p = 70 MPa, la conductivité des agents 1 à 8 est de 0,95 à 1,1 Darcymètre (valeur sensiblement constante) et est semblable à celle des témoins C et D du commerce. Les agents A et B ont, par contre, une conductivité qui chûte dès p = 30 MPa et, pour p = 70 MPa, ont une conductivité de moins de 0,2 Darcymètre.

Les agents préférés 4, 5, 6 et 8 et les témoins C et D du commerce ont été testés jusqu'à p = 100 MPa, leurs conductivités respectives à cette pression de compaction sont égales à 0,78; 0,76; 0,72; 0,82; 0,68 et 0,78.

La conductivité des agents de soutènement de l'invention soutient donc favorablement la comparaison avec celle des meilleurs produits du commerce et cela bien que leur masse volumique soit nettement inférieure.

L'essai de mesure du taux de casse consiste à soumettre un lit multicouche de l'agent à tester, placé dans un cylindre en acier de 50,8 mm de diamètre fermé par un poinçon, à une pression de 70 ou 100 MPa selon le programme suivant: montée en pression en 1 minute puis maintien de la pression pendant 2 minutes. On tamise ensuite l'agent sur un tamis de 0,425 mm d'ouverture de mailles. Le pourcentage de matière passant à travers le tamis est le taux de casse. Dans l'essai à 70 MPa, les taux de casse sont les suivants:

| | Agent | | | | | | | | | | | | |
| --- | --- | --- | --- | --- | --- | --- | --- | --- | --- | --- | --- | --- |
| | 1 | 2 | 3 | 4 | 5 | 6 | 7 | 8 | A | B | C | D |
| Taux de Casse, % | 0,6 | 1,8 | 1,9 | 0,9 | 0,5 | 0,6 | 0,8 | 0,4 | 19,1 | 9,3 | 0,5 | 0,5 |

Dans l'essai à 100 MPa, les taux de casse sont les suivants:

| | Agent | | | | | |
| --- | --- | --- | --- | --- | --- | --- |
| | 4 | 5 | 6 | 8 | C | D |
| Taux de Casse, % | 2,1 | 2,9 | 2,5 | 1,4 | 3,5 | 3,2 |

La résistance des agents de l'invention, en particulier des agents préférés, à la compaction sous pression élevée soutient favorablement la comparaison avec celle des meilleurs agents de soutènement du commerce.

Les essais sous 100 MPa soumettent les agents à des contraintes supérieures à celles effectivement rencontrées dans les gisements les plus profonds.

Tableau 1

| Exemples | Composition, en parties en poids sur la base des oxydes | | Rapport en poids | | Masse volumique (kg/m³) |
| --- | --- | --- | --- | --- | --- |
| 1 | $ZrO_2$ | 49,8 | $\dfrac{ZrO_2}{SiO_2} = 0,992$ | | 3240 |
| | $SiO_2$ | 50,2 | | | |
| 2 | $ZrO_2$ | 46,35 | $\dfrac{ZrO_2}{SiO_2} = 0,864$ | | 3100 |
| | $SiO_2$ | 53,65 | | | |
| | $Al_2O_3$ | 0,81 | | $\dfrac{TiO_2 + FeO}{SiO_2} = 0,008$ | |
| | $TiO_2$ | 0,20 | $\dfrac{Al_2O_3}{SiO_2} = 0,015$ | | |
| | $FeO$ | 0,20 | | | |
| 3 | $ZrO_2$ | 49,2 | $\dfrac{ZrO_2}{SiO_2} = 0,969$ | $\dfrac{Al_2O_3}{SiO_2} = 0,093$ | 3160 |
| | $SiO_2$ | 50,8 | | | |
| | $Al_2O_3$ | 4,7 | | | |
| 4 | $ZrO_2$ | 48,7 | $\dfrac{ZrO_2}{SiO_2} = 0,949$ | | 3230 |
| | $SiO_2$ | 51,3 | | $\dfrac{MgO}{SiO_2} = 0,082$ | |
| | $Al_2O_3$ | 9,3 | $\dfrac{Al_2O_3}{SiO_2} = 0,181$ | | |
| | $MgO$ | 4,2 | | | |
| 5 | $ZrO_2$ | 47,1 | $\dfrac{ZrO_2}{SiO_2} = 0,892$ | | 3180 |
| | $SiO_2$ | 52,9 | | $\dfrac{MgO}{SiO_2} = 0,106$ | |
| | $Al_2O_3$ | 16,2 | $\dfrac{Al_2O_3}{SiO_2} = 0,306$ | | |
| | $MgO$ | 5,6 | | | |
| 6 | $ZrO_2$ | 48,3 | $\dfrac{ZrO_2}{SiO_2} = 0,934$ | | 3170 |
| | $SiO_2$ | 51,7 | | $\dfrac{TiO_2}{SiO_2} = 0,146$ | |
| | $Al_2O_3$ | 10,2 | $\dfrac{Al_2O_3}{SiO_2} = 0,198$ | | |
| | $TiO_2$ | 7,5 | | | |

Fortsetzung

| Exemples | Composition, en parties en poids sur la base des oxydes | | Rapport en poids | | Masse volumique (kg/m³) |
|---|---|---|---|---|---|
| 7 | $ZrO_2$<br>$SiO_2$<br>$Al_2O_3$<br>$TiO_2$<br>FeO | 48,7<br>51,3<br>8,1<br>1,2<br>0,3 | $\dfrac{ZrO_2}{SiO_2} = 0{,}949$<br><br>$\dfrac{Al_2O_3}{SiO_2} = 0{,}158$ | $\dfrac{TiO_2 + FeO}{SiO_2} = 0{,}030$ | 3130 |
| 8 | $ZrO_2$<br>$SiO_2$<br>$Al_2O_3$<br>CaO<br>$TiO_2$ | 48,7<br>51,3<br>12,2<br>4,1<br>1,0 | $\dfrac{ZrO_2}{SiO_2} = 0{,}950$<br><br>$\dfrac{Al_2O_3}{SiO_2} = 0{,}238$ | $\dfrac{CaO + TiO_2}{SiO_2} = 0{,}101$ | 3210 |
| A*) | $ZrO_2$<br>$SiO_2$<br>$Al_2O_3$<br>$TiO_2$<br>FeO | 41,1<br>58,9<br>0,6<br>0,1<br>0,1 | $\dfrac{ZrO_2}{SiO_2} = 0{,}698$<br><br>$\dfrac{Al_2O_3}{SiO_2} = 0{,}010$ | $\dfrac{TiO_2 + FeO}{SiO_2} = 0{,}003$ | 2950 |
| B*) | $ZrO_2$<br>$ZrO_2$<br>$Al_2O_3$ | 37,2<br>62,8<br>0,5 | $\dfrac{ZrO_2}{SiO_2} = 0{,}592$ | $\dfrac{Al_2O_3}{SiO_2} = 0{,}008$ | 2840 |
| C¹) | Billes de bauxite frittée ($Al_2O_3 \simeq 89\%$) | | | | 3730 |
| D²) | Billes à base de zircone et de silice | | $\dfrac{ZrO_2}{SiO_2} = 2{,}2$ | | 3820 |

¹) Produit du commerce vendu sous la marque »High-Strength Proppant« par la Société CARBORUNDUM COMPANY.

²) Produit du commerce vendu sous la dénomination »E. R. 120 B« par la SOCIETE EUROPEENNE DES PRODUITS REFRACTAIRES.

*) Les produits A et B sont des produits expérimentaux en dehors du cadre de l'invention.

**Revendications**

1. Utilisation, comme agent de soutènement granulaire pour fractures géologiques à haute résistance mécanique et d'une masse volumique inférieure à 3250 Kg/m³, de billes formées par fusion, granulation et solidification, d'une composition de départ comprenant, en poids sur la base des oxydes, 46 à 50 parties de $ZrO_2$, 54 à 50 parties de $SiO_2$, la somme $ZrO_2$ + $SiO_2$ totalisant 100 parties, 0 à 19 parties d'$Al_2O_3$ et 0 à 13,5 parties d'au moins un oxyde choisi dans le groupe formé par MgO, CaO, FeO et $TiO_2$.

2. Utilisation selon la revendication 1, caractérisée en ce que les billes sont formées à partir d'une composition de départ comprenant au moins 4 parties d'$Al_2O_3$.

3. Utilisation selon la revendication 1 ou 2, caractérisée en ce que les billes sont formées à partir d'une composition de départ comprenant au moins 1 partie d'au moins un oxyde choisi dans le groupe formé par MgO, CaO, FeO et $TiO_2$.

4. Utilisation selon la revendication 1, caractérisée en ce que les billes sont formées à partir d'une composition de départ comprenant 47,1 à 48,7 parties de $ZrO_2$, 52,9 à 51,3 parties de $SiO_2$, 8,2 à 16,9 parties d'$Al_2O_3$ et 4,1 à 8,5 parties d'au moins un oxyde choisi dans le groupe formé par MgO, CaO, FeO et $TiO_2$.

5. Utilisation selon l'une quelconque des revendications 1 à 4, caractérisée en ce que les billes ont une grosseur comprise entre 0,25 et 2,0 mm.

**Patentansprüche**

1. Verwendung von durch Schmelzen, Granulieren und Verfestigung gewonnenen Kugeln als Stützmaterial für geologische Spalten, mit einer hohen mechanischen Festigkeit und einer Volumenmasse, die geringer als 3250 kg/m³ ist, mit einer Ausgangszusammensetzung, die auf der Basis der Oxyde in Gewichten 46—50 Teile $ZrO_2$, 54—50 Teile $SiO_2$, wobei die Summe von $ZrO_2$ und $SiO_2$ zusammen 100 Teile ergibt, 0—19 Teile $Al_2O_3$ und 0—13,5 Teile wenigstens eines Oxydes, das aus der Gruppe gewählt wird, die durch MgO, CaO, FeO und $TiO_2$ gebildet ist.

2. Verwendung nach Anspruch 1, dadurch gekennzeichnet, daß die Kugeln aus einer Ausgangszusammensetzung hergestellt werden, die wenigstens vier Teile $Al_2O_3$ enthält.

3. Verwendung nach Anspruch 1 oder 2, dadurch gekennzeichnet, daß die Kugeln aus einer Ausgangszusammensetzung gebildet werden, die wenigstens ein Teil von wenigstens einem der Oxyde, die durch die Gruppe MgO, CaO, FeO und $TiO_2$ gebildet werden, enthält.

4. Verwendung nach Anspruch 1, dadurch gekennzeichnet, daß die Kugeln aus einer Ausgangszusammensetzung hergestellt werden, die 47,1—48,7 Teile $ZrO_2$, 52,9—51,3 Teile $SiO_2$, 8,2—16,9 Teile $Al_2O_3$ und 4,1—8,5 Teile wenigstens eines Oxydes enthalten, die aus der Gruppe gewählt werden, die durch MgO, CaO, FeO und $TiO_2$ gebildet wird.

5. Verwendung nach einem der vorhergehenden Ansprüche 1 bis 4, dadurch gekennzeichnet, daß die Kugeln eine Größe zwischen 0,25 und 2 mm aufweisen.

**Claims**

1. The use, as a granular propping agent for geological fractures having a high mechanical resistance and a density lower than 3250 kg/m³, of balls made by melting, granulating and solidifying a starting composition which comprises essentially, by weight on the oxide basis, 46 to 50 parts of $ZrO_2$, 54 to 50 parts of $SiO_2$, the total $ZrO_2$ + $SiO_2$ amounting to 100 parts, 0 to 19 parts of $Al_2O_3$ and 0 to 13,5 parts of at least one oxide selected from the group consisting of MgO, CaO, FeO and $TiO_2$.

2. The use according to claim 1, characterized in that the balls are made from a starting composition comprising at least 4 parts of $Al_2O_3$.

3. The use according to claim 1 or 2, characterized in that the balls are made from a starting composition comprising at least 1 part of at least one oxide selected from the group consisting of MgO, CaO, FeO and $TiO_2$.

4. The use according to claim 1, characterized in that the balls are made from a starting composition comprising 47,1 to 48,7 parts of $ZrO_2$, 52,9 to 51,3 parts of $SiO_2$, 8,2 to 16,9 parts of $Al_2O_3$ and 4,1 to 8,5 parts of at least one oxide selected from the group consisting of MgO, CaO, FeO and $TiO_2$.

5. The use according to any of claims 1 to 4, characterized in that the balls have a size comprised between 0,25 and 2,0 mm.